Europäisches Patentamt

European Patent Office

Office européen des brevets

(11) Numéro de publication: **0 542 343 A1**

## DEMANDE DE BREVET EUROPEEN

(21) Numéro de dépôt: **92203377.4**

(22) Date de dépôt: **03.11.92**

(51) Int. Cl.[5]: **C09C 1/00**, C01G 39/00, C03C 1/04, C08K 3/24

(30) Priorité: **12.11.91 BR 9104902**

(43) Date de publication de la demande: **19.05.93 Bulletin 93/20**

(84) Etats contractants désignés:
**AT BE CH DE ES FR GB IT LI NL**

(71) Demandeur: **SOLVAY (Société Anonyme)**
**Rue du Prince Albert, 33**
**B−1050 Bruxelles(BE)**

(72) Inventeur: **Demets, Marc**
**Rua C No 3 − Vila Elclor**
**Santo Andre, Sao Paulo(BR)**
Inventeur: **Lellis, Fernando**
**Rua 2 No 19 − Vila Elclor**
**Santo Andre, Sao Paulo(BR)**
Inventeur: **De Souza, Paulo**
**Rua Helena Mussumeci, 40**
**Sao Caetano Do Sul, Sao Paulo(BR)**

(74) Mandataire: **Marckx, Frieda et al**
**Solvay Département de la Propriété**
**Industrielle Rue de Ransbeek, 310**
**B−1120 Bruxelles (BE)**

(54) **Pigments inorganiques jaunes à base de sels de lanthanides et compositions pigmentées.**

(57) L'invention concerne des pigments inorganiques jaunes constitués de molybdates doubles de cérium et d'un métal alcalin de formule générale :

Ce M (MoO$_4$)$_2$

dans laquelle M représente un métal alcalin, de préférence le sodium.

Elle concerne également des compositions à base de matières polymériques ou encore de verre pigmentées au moyen des molybdates doubles de cérium et d'un métal alcalin.

EP 0 542 343 A1

La présente invention concerne de nouveaux pigments inorganiques jaunes à base de sels de lanthanides et des compositions pigmentées à leur intervention.

Les pigments, que l'on peut définir comme étant des substances pulvérulentes insolubles dotées d'un pouvoir colorant et opacifiant, sont largement utilisés dans de nombreuses industries et, notamment, dans celles des matières plastiques, des peintures et des vernis, de la verrerie, de la papeterie, de la cosmétologie, etc.

Le sulfure de cadmium, le chromate de plomb et ses mélanges avec le sulfate de plomb constituent des pigments inorganiques jaunes bien connus qui présentent l'inconvénient notoire de contenir des métaux toxiques, ce qui limite très fortement leurs domaines d'application.

Dans la demande de brevet EP − A − 203 838 (RHONE POULENC SPECIALITES), on décrit l'utilisation de sulfure de lanthane ($La_2S_3$), comme pigment inorganique jaune. Ce pigment présente l'avantage de dériver d'un élément de la famille des lanthanides réputés peu ou non toxiques. Par contre, sa synthèse implique la mise en oeuvre d'un courant gazeux d'hydrogène sulfuré, gaz très toxique, à des températures élevées, supérieures à 800° C, ce qui constitue un inconvénient sérieux.

La présente invention vise à procurer de nouveaux pigments inorganiques jaunes exempts de métaux réputés toxiques qui ne présente pas l'inconvénient précité et qui constituent, par ailleurs, des pigments ayant un ensemble de propriétés intéressantes.

A cet effet, l'invention concerne de nouveaux pigments inorganiques jaunes à base de sels de lanthanides, caractérisés en ce qu'ils sont constitués de molybdates doubles de cérium et de métaux alcalins de formule générale :

$$Ce\ M\ (MoO_4)_2$$

dans laquelle M représente un métal alcalin.

Les nouveaux pigments inorganiques jaunes selon l'invention sont donc constitués de molybdates doubles de cérium trivalent et d'un métal alcalin.

Pour qu'une substance pulvérulente colorée soit utilisable comme pigment, il convient qu'elle réponde à un grand nombre d'exigences. En l'occurence, il ne suffit pas qu'elle présente un pouvoir colorant élevé. En effet, il est essentiel qu'elle présente en outre un ensemble de propriétés, telles qu'une stabilité thermique, une résistance chimique et une résistance aux rayons ultraviolets élevées, une insolubilité dans l'eau et dans les solvants, ainsi qu'une bonne dispersibilité dans de nombreux substrats, etc. Les molybdates doubles de cérium et de métaux alcalins répondent à toutes ces exigences et sont, de ce fait, utilisables pour la pigmentation de matières organiques et minérales très diverses.

A titre d'exemples de molybdates doubles de cérium selon l'invention, on peut citer ceux dans lesquels le métal alcalin est le sodium, le potassium ou le lithium (et leurs mélanges). Le molybdate double de cérium et de sodium constitue un pigment inorganique jaune particulièrement préféré selon la présente invention.

Les molybdates doubles de cérium et d'un métal alcalin selon l'invention peuvent être synthétisés de manière simple et économique. Un mode opératoire avantageux pour les produire consiste à les précipiter à pH acide à partir de solutions aqueuses de molybdates de métaux alcalins et de sels céreux, en particulier de chlorure céreux, de les séparer du milieu aqueux de synthèse par filtration, suivie de séchage à poids constant. Les molybdates doubles sont ensuite broyés de manière à produire des poudres dont les particules présentent un diamètre moyen égal à 50 $\mu$m au maximum.

La présente invention concerne également l'utilisation, à titre de pigments inorganiques jaunes, des molybdates doubles de cérium et d'un métal alcalin. Les nouveaux pigments inorganiques jaunes selon l'invention conviennent pour la pigmentation de matières organiques et minérales très diverses telles que, par exemple, les matières polymériques, les peintures et vernis, les encres d'imprimerie, le papier, le verre et les céramiques. Ils conviennent tout particulièrement pour la pigmentation des matières polymériques et du verre.

La présente invention concerne également des compositions pigmentées à base de matières polymé − riques comprenant un sel de lanthanide à titre de pigment inorganique jaune, caractérisées en ce que le sel de lanthanide est choisi parmi les molybdates doubles de cérium et d'un métal alcalin. A titre d'exemples non limitatifs de matières polymériques qui peuvent être pigmentées à l'aide des nouveaux pigments jaunes selon l'invention, on peut mentionner, d'une part, les matières polymériques thermoplastiques telles que les polymères vinyliques et vinylidéniques, les polyoléfines, les polymères dérivés d'esters et de nitriles (méth)acryliques, les polymères de styrène, les polyamides (et leurs mélanges) et, d'autre part, les matières polymériques thermodurcissables telles que les phénoplastes, les aminoplastes, les résines époxydes, les polyesters thermodurcissables (et leurs mélanges).

Les nouveaux pigments inorganiques jaunes selon l'invention conviennent particulièrement pour la pigmentation des matières polymériques thermoplastiques et, plus particulièrement encore pour la pigmentation des polymères vinyliques et vinylidéniques, tels que les polymères, homo – et copolymères, des chlorures et des fluorures de vinyle et de vinylidène et des polyoléfines, telles que le polyéthylène et le polypropylène et leurs copolymères. Ils conviennent tout particulièrement pour la pigmentation des polymères, homo – et copolymères, du chlorure de vinyle, de l'éthylène et du propylène. Des compositions pigmentées à base de matières polymériques tout particulièrement préférées sont celles à base de polychlorure de vinyle, de polyéthylène et de copolymères de l'éthylène avec les alphamonooléfines contenant de 3 à 18 atomes de carbone et de polypropylène et de copolymères du propylène avec des alphaoléfines contenant de 2 à 18 atomes de carbone. Suivant un mode de réalisation particulièrement préféré de la présente invention, ces matières polymériques sont pigmentées au moyen de molybdate double de cérium et de sodium.

La quantité de pigment inorganique jaune à mettre en oeuvre dans les compositions à base de matières polymériques dépendra, bien entendu, dans chaque cas particulier, de l'intensité de la coloration jaune recherchée et de la nature de la matière polymérique pigmentée. Afin de fixer les idées, les pigments inorganiques jaunes selon l'invention peuvent être incorporés dans les compositions à base de matières polymériques en une proportion allant de 0,01 à 5 parties environ pour 100 parties en poids de la composition. Généralement, on ne dépassera pas une proportion de 2 parties en poids. De préférence, le pigment jaune selon l'invention sera utilisé à raison de 0,15 à 1,5 partie environ pour 100 parties en poids de la composition.

La présente invention concerne également des compositions pigmentées à base de verre comprenant un sel de lanthanide à titre de pigment inorganique jaune, caractérisées en ce que le sel de lanthanide est choisi parmi les molybdates doubles de cérium et d'un métal alcalin. La quantité de pigment inorganique jaune à mettre en oeuvre dans les compositions à base de verre n'est pas non plus critique. Pour fixer les idées, les pigments inorganiques jaunes selon l'invention peuvent être incorporés dans les compositions à base de verre en une proportion allant de 0,1 à 10 parties environ pour 100 parties en poids de la composition. Généralement, on ne dépassera pas une proportion de 5 parties en poids. De préférence, le pigment jaune selon l'invention sera utilisé à raison de 0,5 à 4,5 parties environ pour 100 parties en poids de la composition.

Il est entendu que le mode d'incorporation du pigment inorganique jaune selon l'invention n'est pas critique. Le pigment peut être incorporé de toute manière appropriée dans les matières à pigmenter, telle que, par exemple, directement dans la totalité de la masse à pigmenter ou encore sous la forme d'un préconcentré.

Il est également entendu que les compositions à base de matières polymériques et celles à base de verre peuvent comprendre, outre le pigment jaune selon l'invention, tous les ingrédients usuels de ce type de compositions, tels que par exemple, dans le cas des matières polymériques, des stabilisants thermiques, des agents lubrifiants, plastifiants, des agents de mise en oeuvre, etc.

Les exemples qui suivent sont destinés à illustrer l'invention.

L'exemple 1 concerne la synthèse de molybdate double de cérium et de sodium et sa caractérisation.

Les exemples 2, 4, 6 et 7 illustrent l'utilisation du molybdate double de Ce – Na produit à l'exemple 1 pour la fabrication de compositions pigmentées à base de matières polymériques (exemples 2, 4 et 6) et de verre (exemple 7). Les exemples 3R et 5R, donnés à titre comparatif, concernent des compositions non pigmentées.

Dans les exemples 2 et 3R, la matière polymérique est constituée de polyéthylène à haute densité (PE HD) présentant un indice de fluidité (MFI) de l'ordre de 5,5 g/min (à 190° C sous une charge de 2,16 kg, commercialisé par SOLVAY sous la marque ELTEX A 1050).

Dans les exemples 4 et 5R, la matière polymérique est constituée de polypropylène présentant un indice de fluidité (MFI) de l'ordre de 11 g/min (à 230° C sous une charge de 2,16 kg), commercialisé par SOLVAY sous la marque ELTEX P HV 001).

Dans l'exemple 6, la matière plastique est constituée de polychlorure de vinyle ayant un nombre K égal à 71 (mesuré à 25° C dans la cyclohexanone à 5 g/l), commercialisé par SOLVAY sous la marque SOLVIC 271 GC.

3

Exemple 1

Fabrication

Dans un bécher d'une contenance de 3 litres, pourvu d'un agitateur, on introduit 2 litres d'une solution 0,33 molaire de $Na_2MoO_4.2H_2O$ que l'on porte à une température de 60° C. Sous agitation constante, on ajoute lentement 260 ml d'une solution 1,25 molaire de $CeCl_3$, x $H_2O$ (contenant 99 % en poids de $CeCl_3$) préalablement chauffée à 60° C se trouvant à pH 5. Il se forme un précipité jaune. Après agitation du milieu pendant 30 minutes, on laisse reposer le précipité pendant 5 heures à température ambiante. La réaction est pratiquement quantitative. Après filtration, le précipité jaune est lavé abondamment avec de l'eau, puis séché à poids constant à 200° C. Le solide séché est broyé et tamisé à 325 mesh (= particules $\leq$ 50 $\mu$m).

Caractérisation

Le solide jaune isolé, analysé par la technique du plasma d'émission atomique (ICP), a la composition suivante :

Na = 4,82 % Ce = 28,74 % Mo = 39,60 %,

ce qui correspond à la formule générale $NaCe(MoO_4)_2$.

Le molybdate double de cérium et de sodium présente une structure crystallographique du type Scheelite (tungstate de calcium) dans laquelle les cations $Ce^{+++}$ et $Na^+$ occupent des positions alternées le long d'un axe parallèle à l'axe optique du cristal. Il disperse la lumière, principalement dans la région des rayons ultraviolets. A 450 nm, il présente une absorptivité molaire de l'ordre de $1,5.10^2$ $M^{-1}cm^{-1}$. Ses coordonnées trichromatiques exprimées dans le système de Hunter et mesurées dans une matrice de polyéthylène (conditions de mesure et de préparation des échantillons, cf. exemple 2) sont les suivantes :

L = 79,6 a = −8,2 b = 47,6.

Le molybdate double de cérium et de sodium présente une résistance élevée aux rayons ultraviolets (cf. exemple 2). Sa température de fusion est supérieure à 900° C et il ne subit aucune altération lorsqu'on le chauffe jusqu'à des températures de l'ordre de sa température de fusion. Il est insoluble dans l'eau et dans les solvants, tels que, par exemple, l'éther éthylique, le benzène, le chloroforme, l'éthanol et le méthanol.

Exemple 2 et exemple 3R

L'exemple 2 illustre l'utilisation de molybdate double de Ce − Na obtenu à l'exemple 1 pour produire une composition pigmentée à base de polyéthylène. L'exemple 3R, donné à titre comparatif, concerne une composition identique exempte de pigment.

Dans un mélangeur mécanique tournant à la vitesse de 1500 t/min, on a mélangé pendant 5 minutes les ingrédients suivants, toutes les quantités étant exprimées en poids.

| | |
|---|---|
| PE HD | 99,855 |
| Benzotriazole(anti − UV) | 0,040 |
| HALS (stabilisant lumière) | 0,040 |
| Antioxydant phénolique | 0,025 |
| Stéarate de calcium | 0,040 |
| $CeNa(MoO_4)_2$ | 0,98 (exemple 2) |
| $CeNa(MoO_4)_2$ | nil (exemple 3R) |

On a fabriqué des plaques d'une épaisseur de 1,6 mm par injection des compositions (prémix) pigmentées (exemple 2) et non pigmentées (exemple 3R) ci − dessus sous une pression de 70 kg/cm2 à l'aide d'une machine d'injection sous un profil de températures : 300° C, 300° C, 280° C et 240° C. L'injection est réalisée dans un moule maintenu à 70° C.

Evaluation de la résistance du pigment aux rayons UV

Des échantillons de plaques pigmentées (exemple 2) ont été exposés aux rayons UV dans un appareil de type Atlas Weather Ometer (modèle CI 65 A) pourvu d'une lampe (Xenon) d'une puissance de 6500 Watt et de filtres (interne et externe) en borosilicate dans les conditions de la norme DIN 53387 – 1 (1989). Après des laps de temps déterminés, précisés dans le tableau I en annexe, on a retiré les échantillons et mesuré, à l'aide d'un photocolorimètre, les coordonnées trichromatiques sous l'illuminant D 65 dans un champ annulaire de 10˚ et contre un fond blanc. La mesure de la couleur est exprimée dans le système de Hunter (L,a,b) dans lequel :

L donne une mesure de la réflectance (nuance clair/sombre) et varie de 100 (blanc) à 0 (noir),

a et b sont les valeurs des tendances colorées :

a représente la variation du rouge (positif) au vert (négatif)

b représente la variation du jaune (positif) au bleu (négatif).

Les résultats de cette évaluation figurent dans le tableau I annexé dans lequel sont précisées également les conditions d'exposition (durée, flux d'énergie).

L'examen des résultats indique que le molybdate double de Ce – Na constitue un pigment résistant aux rayons UV, ces coordonnées trichromatiques restant pratiquement inchangées après de longues périodes d'exposition aux rayons U.V.

Evaluation de la photodégradation du polyéthylène pigmenté

Sur des éprouvettes de type ISO découpées dans des plaques pressées pigmentées (exemple 2) et non pigmentées (exemple 3R), on a évalué, avant et après exposition aux rayons UV dans les mêmes conditions que ci – dessus, les caractéristiques en traction suivant la norme NF T51 – 034 des échantillons dans les conditions suivantes :

vitesse de traction  : 100 mm/min

atmosphère des essais : 23˚ C, 50 % HR.

Dans le tableau I, en annexe, sont repris les résultats de l'évaluation de la tension à la rupture des différentes éprouvettes (moyenne de 5 mesures).

La comparaison des résultats de l'exemple 2, selon l'invention, avec ceux de l'exemple 3R, de référence, indique que non seulement le molybdate double de Ce – Na protège le PE de la photodégrada – tion, mais qu'il accroît sa résistance à la photodégradation.

Incidence sur la cristallinité

Sur des échantillons de plaques pigmentées (exemple 2) et non pigmentées (exemple 3R), on a évalué les températures et les chaleurs de cristallisation et de fusion par analyse calorimétrique différentielle (Differential Scanning Calorimetry) sous un flux de chaleur relatif de 5 mW/cm. Les résultats de l'évaluation figurent au Tableau II en annexe.

La comparaison des résultats de l'exemple 2 avec ceux de l'exemple 3R, de référence, atteste que le molybdate double de Ce – Na n'a pas d'effet significatif sur la critallinité du PE et donc sur ses propriétés mécaniques.

Exemple 4 et exemple 5R

L'exemple 4 illustre l'utilisation du molybdate double Ce – Na obtenu à l'exemple 1 pour produire une composition pigmentée à base de polypropylène. L'exemple 5R, donné à titre comparatif, concerne une composition identique exempte de pigment.

Dans des conditions identiques à celles décrites à l'exemple 2, on fabrique des plaques pigmentées (exemple 4) et non pigmentées (exemple 5R) d'une épaisseur de 1,6 mm au départ de compositions identiques à celles décrites à l'exemple 2, si ce n'est qu'on a remplacé le polyéthylène (PE HD) par du polypropylène (PP). L'incidence de la pigmentation du PP au moyen de molybdate double de Ce – Na sur sa cristallinité a été évaluée dans les mêmes conditions que celles exposées ci – dessus à l'exemple 2. Les résultats de l'évaluation sont également repris dans le Tableau II en annexe. La comparaison des résultats de l'exemple 4 avec ceux de l'exemple 5R, de référence, indique que le molybdate double de Ce – Na n'a pas d'effet significatif sur la cristallinité du PP et donc sur ses propriétés mécaniques.

Exemple 6

Cet exemple illustre l'utilisation du molybdate double de cérium et de sodium obtenu à l'exemple 1 pour produire une composition pigmentée à base de polychlorure de vinyle.

Dans un mélangeur mécanique tournant à la vitesse de 1500 t/min, on a mélangé pendant 5 minutes les ingrédients suivants (toutes les parties étant exprimées en poids) :

| | |
|---|---|
| Polychlorure de vinyle | 65,79 |
| Phtalate de di − éthylhexyle (plastifiant) | 32,89 |
| Stabilisant thermique Ba/Zn | 1,32 |
| $CeNa(MoO_4)_2$ | 0,98 (essai 1)<br>0,20 (essai 2) |
| | 0,00 (essai 3, référence). |

Les trois échantillons (selon les essais 1, 2 et 3) sont malaxés à 170° C pendant 10 minutes (friction = 20 %), puis pressés, d'abord à 170° C pendant 9 minutes sous une pression de 10 kg/cm$^2$ et ensuite à 40° C pendant 15 minutes sous 100 kg/cm$^2$.

On évalue la stabilité thermique des trois échantillons à 191° C après un conditionnement thermique de 15 minutes à 191° C. Le tableau ci − dessous rassemble les résultats de cette évaluation. Le temps écoulé avant d'observer à l'oeil nu un début de dégradation thermique est compté à partir de la fin des 15 minutes de conditionnement thermique.

| N° de l'échantillon | Début de dégradation thermique, |
|---|---|
| essai 1 | 42 min |
| essai 2 | 45 min |
| essai 3 (de référence) | 44 min |

Les résultats ci − dessus indiquent que le molybdate double de Ce − Na n'a pas d'effet significatif sur la stabilité thermique du polychlorure de vinyle.

Exemple 7

Cet exemple illustre l'utilisation de molybdate double de Ce − Na obtenu à l'exemple 1 pour produire une composition pigmentée à base de verre.

98 g de verre de type Pyrex sont triturés pour les réduire en poudre avant de les mélanger avec 2 g de molybdate double Ce − Na. Le mélange homogénéisé est chauffé pendant 40 minutes à 950° C pour produire une fritte colorée d'une épaisseur de 0,9 mm dont les coordonnées trichromatiques L, a, et b exprimées dans le système de Hunter (conditions de mesure, cf. exemple 2) sont les suivantes :

L = 79,4 a = − 8,0 b = 47,9

La comparaison de la valeur des coordonnées trichromatiques L, a et b avec celles fournies à l'exemple 1 atteste de la bonne stabilité thermique du molybdate double de Ce − Na et de la possibilité de l'utiliser pour la pigmentation du verre.

## TABLEAU I

| Résistance du pigment aux rayons U.V. | | | | | Photodégradation du polyéthylène | |
|---|---|---|---|---|---|---|
| Temps d'exposition, h | Flux d'énergie MJ/m$^2$ | Coordonnées trichromatiques | | | Tension à la rupture, MPa | |
| | | L | a | b | N° de l'exemple | |
| | | | | | 2 | 3R |
| 0 | 0 | 79,6 | −8,2 | 47,6 | 12,1 | 12,1 |
| 185 | 636 | 80,0 | −8,6 | 48,1 | 12,1 | 12,2 |
| 375 | 1289 | 80,0 | −8,7 | 48,3 | 12,2 | 11,8 |
| 783 | 2690 | 79,8 | −8,7 | 48,3 | 11,8 | 11,1 |
| 1623 | 5577 | 79,8 | −8,7 | 48,0 | 11,5 | 9,6 |
| 2197 | 7552 | 80,0 | −8,6 | 47,5 | 10,5 | 7,8 |

## TABLEAU II

| Incidence du pigment sur la cristallinité | | | | |
|---|---|---|---|---|
| Numéro de l'exemple | Cristallisation* | | Fusion** | |
| | temp., °C | J/g | temp., °C | J/g |
| 2 (PE pigmenté) | 117,1 | −211 | 134,7 | 213 |
| 3R (PE non pigmenté) | 118,0 | −212 | 135,2 | 219 |
| 4 (PP pigmenté) | 116,0 | −101 | 161,3 | 106 |
| 5R (PP non pigmenté) | 117,1 | −102 | 162,4 | 104 |

* : premier refroidissement
** : deuxième chauffage

## Revendications

1. Pigments inorganiques jaunes à base de sels de lanthanides, caractérisés en ce qu'ils sont constitués de molybdates doubles de cérium et d'un métal alcalin répondant à la formule générale :

Ce M (MoO$_4$)$_2$

dans laquelle M représente un métal alcalin.

2. Pigments inorganiques jaunes selon la revendication 1, caractérisés en ce que le molybdate double de cérium est du molybdate double de cérium et de sodium.

3. Compositions pigmentées à base de matières polymériques comprenant un sel de lanthanide à titre de pigment inorganique jaune, caractérisées en ce que le sel de lanthanide est choisi parmi les molybdates doubles de cérium et d'un métal alcalin répondant à la formule générale :

Ce M (MoO$_4$)$_2$

dans laquelle M représente un métal alcalin.

4. Compositions pigmentées à base de matières polymériques selon la revendication 3, caractérisées en ce que le molybdate double de cérium est du molybdate double de cérium et de sodium.

5. Compositions pigmentées à base de matières polymériques selon la revendication 3, caractérisées en ce que la matière polymérique est un polymère thermoplastique.

6. Compositions pigmentées à base de matières polymériques selon la revendication 5, caractérisées en ce que le polymère thermoplastique est un polymère du chlorure de vinyle.

7. Compositions pigmentées à base de matières polymériques selon la revendication 5, caractérisées en ce que le polymère thermoplastique est un polymère d'éthylène ou de propylène.

8. Compositions pigmentées à base de matières polymériques selon la revendication 3, caractérisées en ce qu'elles contiennent de 0,01 à 5 parties environ de molybdate double de cérium et de métal alcalin pour 100 parties en poids de la composition.

9. Compositions pigmentées à base de verre comprenant un sel de lanthanide à titre de pigment inorganique jaune, caractérisées en ce que le sel de lanthanide est choisi parmi les molybdates doubles de cérium et d'un métal alcalin répondant à la formule générale :

Ce M $(MoO_4)_2$

dans laquelle M représente un métal alcalin.

10. Compositions pigmentées à base de verre selon la revendication 9, caractérisées en ce que le molybdate double de cérium est du molybdate double de cérium et de sodium.

11. Compositions pigmentées à base de verre selon la revendication 9, caractérisées en ce qu'elles contiennent de 0,1 à 10 parties environ de molybdate double de cérium et de métal alcalin pour 100 parties en poids de la composition.

**Office européen des brevets**

**RAPPORT DE RECHERCHE EUROPEENNE**

Numero de la demande

EP    92 20 3377

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 101, no. 16, 2 Juillet 1984, Columbus, Ohio, US; abstract no. 142080w, A.N.EGOROVA ET AL. 'Study of ferroelectric alkali metal and cerium double molybdates and tungstates' * abrégé * & FIZ. KHIM. TVERD. TELA 1982, pages 87 - 92 --- | 1,2 | C09C1/00 C01G39/00 C03C1/04 C08K3/24 |
| X | CHEMICAL ABSTRACTS, vol. 95, 6 Juillet 1981, Columbus, Ohio, US; abstract no. 125298w, A.N.EGOROVA ET AL. 'Structural features of a double lithium and cerium molybdate' page 680 ;colonne 2 ; * abrégé * & IZV. AKAD. NAUK. SSSR, NEORG. MATER. vol. 17, no. 6, 1981, pages 1130 - 1131 --- | 1 | |
| A | GLASS AND CERAMICS. vol. 32, no. 7/8, Août 1975, NEW YORK US pages 476 - 478 S.G.TUMANOV ET AL. 'Pigments in the CeO2-MoO3 system' * page 477, alinéa 9 - page 478, alinéa 4 * --- | 1,9 | **DOMAINES TECHNIQUES RECHERCHES (Int. Cl.5)** C09C C01G C03C |
| D,A | EP-A-0 203 838 (RHONE-POULENC SPECIALITES CHIMIQUES) * le document en entier * ----- | 3,5-8 | |

Le présent rapport a été établi pour toutes les revendications

| Lieu de la recherche | Date d'achèvement de la recherche | Examinateur |
|---|---|---|
| LA HAYE | 09 FEVRIER 1993 | VAN DER POEL W. |